# EUROPÄISCHE PATENTANMELDUNG

(11) **EP 4 682 410 A1**
(43) Veröffentlichungstag der Anmeldung: **21.01.2026**
(21) Anmeldenummer: 25190381.1
(22) Anmeldetag: 18.07.2025
(51) Int. Cl.: F16K 1/02, F16K 1/48, F16K 27/02, F16K 41/10, F16K 51/02, F16K 1/42

(54) **VENTIL**

(30) Priorität: 19.07.2024 AT 506002024
(71) Anmelder: Swacrit Systems GmbH, 6060 Hall in Tirol (AT)
(72) Erfinder: Rauch, Josef, 6020 Innsbruch (AT)
(74) Vertreter: Wildhack & Jellinek Patentanwälte GmbH

(57) **Zusammenfassung**

Die Erfindung betrifft ein Ventil, insbesondere Vakuumventil (1), zum gasdichten Unterbrechen und Steuern eines Fließweges, umfassend:
- ein Ventilgehäuse (2) mit einer ersten Ventilöffnung (4) und einer zweiten Ventilöffnung (5),
- ein Verschlusselement (3), welches in einem Innenraum des Ventilgehäuses (2) angeordnet ist und in einer Achse (6) zwischen einer Offenstellung und einer Schließstellung verfahrbar ist und in der Schließstellung an einem Ventilsitz (7) des Ventils anliegt und den von der ersten Ventilöffnung (4) zur zweiten Ventilöffnung (5) verlaufenden Durchgangskanal verschließt und das Verschlusselement (3) in der Offenstellung vom Ventilsitz (7) abgehoben ist, wobei in der Offenstellung des Verschlusselements (3) ein von der ersten Ventilöffnung (4) zur zweiten Ventilöffnung (5) verlaufender Durchgangskanal durch das Ventil freigegeben ist,
wobei das Ventil ein Rohrstück (11) aufweist, wobei in dem Rohrstück (11) der Ventilsitz (7) ausgebildet ist, wobei das Rohrstück (11) über eine Passung in dem Ventilgehäuse (2) herausziehbar eingebracht angeordnet ist und mit einem Sicherungsring (10) lösbar in dem Ventilgehäuse (2) gesichert und fixiert ist.

## Beschreibung

Die Erfindung betrifft ein Ventil, insbesondere ein Vakuumventil, zum fluiddichten, insbesondere gasdichten, Unterbrechen eines Fließweges gemäß dem Oberbegriff des Patentanspruchs 1.

Ventile sind Bauteile, die zum Absperren oder der Steuerung des Durchflusses eines Mediums in unterschiedlichen Einsatzbereiten verwendet werden. So werden Ventile beispielsweise zur Veränderung des Durchflusses von Prozessgasen oder Flüssigkeiten verwendet.

Vakuumventile sind Bauteile, die zur Absperrung oder Steuerung des Durchflusses in einem Vakuumsystem verwendet werden. Aus dem Stand der Technik sind unterschiedliche Vakuumventile bekannt, die einzelne Bauteile eines Vakuumsystems verbinden.

Aus der DE 102019130157 A1 ist ein Vakuumventil bekannt, bei dem die einzelnen Komponenten über ein zweiteiliges Gehäuse montiert und dann die beiden Teile des Gehäuses mittels Schrauben verbunden und gesichert werden.

Die WO 2023/156359 A1 zeigt ein Vakuumventil mit einem Drucksensor mit dem der Durchfluss zwischen zwei eckförmig angeordneten Anschlüssen unterbrochen werden kann.

Nachteil der aus dem Stand der Technik bekannten Ventile ist es, dass diese meist einen komplizierten Aufbau aufweisen und die Verbindungen der einzelnen Komponenten viel Platz benötigen und die Ventile unnötig große Dimensionen und Massen aufweisen.

Es ist daher Aufgabe der vorliegenden Erfindung, ein Ventil der eingangs erwähnten Art zu schaffen, das einen einfachen und platzsparenden Aufbau aufweist und eine zuverlässige Funktion des Ventils ermöglicht.

Diese Aufgabe wird durch die kennzeichnenden Merkmale des Anspruchs 1 gelöst. Dabei ist vorgesehen, dass das Ventil ein Rohrstück aufweist, an dem der zweite Flansch angeordnet ist, wobei in dem Rohrstück der Ventilsitz ausgebildet ist, wobei das Rohrstück über eine Passung in dem Ventilgehäuse herausziehbar eingebracht angeordnet ist und mit einem Sicherungsring lösbar in dem Ventilgehäuse gesichert und fixiert ist.

Durch das Rohrstück, das mit dem Sicherungsring oder auch Sprengring genannt in dem Ventilgehäuse gesichert ist, kann das Rohrstück einfach, durch Entfernen des Sicherungsrings, aus dem Ventilgehäuse entfernt werden. Zur Entfernung des Sicherungsrings ist dazu nur eine spezielle Zange nötig, die es erlaubt in nur wenigen Handgriffen den Sicherungsring zu entfernen und damit das Rohrstück aus dem Ventilgehäuse zu entfernen. Dies ist insbesondere beim Austausch, der Wartung und der Reinigung einzelner Teile des Ventils vorteilhaft. Weiters kann das Ventilgehäuse sehr dünnwandig und schmal ausgeführt werden, da aufwändige Befestigungselemente oder Abdeckungen, mit denen der Zugang ins Innere des Ventils gewährleistet werden soll, entfallen können.

Besonders vorteilhafte Ausführungsformen des Ventils werden durch die Merkmale der abhängigen Ansprüche näher definiert:
Eine bevorzugte Ausbildung des Ventils wird bereitgestellt, wenn die erste Ventilöffnung eine erste Achse aufweist und die zweite Ventilöffnung eine, winkelig zur ersten Achse stehende, zweite Achse aufweist, wobei die erste Achse und die zweite Achse sich in einem Schnittpunkt schneiden, wobei insbesondere die erste Achse und die zweite Achse senkrecht in einem Winkel von 90° zueinander angeordnet sind und das Ventil als Eckventil ausgebildet ist und die Achse des Verschlusselements mit der zweiten Achse koaxial angeordnet ist.

Vorteilhaft weist das Ventil einen ersten Flansch im Bereich der ersten Ventilöffnung und einen zweiten Flansch im Bereich der zweiten Ventilöffnung auf, mit denen das Ventil mit anderen Bauteilen eines Rohr- oder Leitungssystems, insbesondere eines Vakuumsystems, verbindbar ist, wobei insbesondere der zweite Flansch an dem Rohrstück angeordnet ist.

Zur Abdichtung des Ventilgehäuses kann optional vorgesehen sein, dass an dem Rohrstück umfangseitig eine Ausnehmung für einen Dichtring ausgebildet ist, mit dem das Rohrstück gegen das Ventilgehäuse des Ventils abgedichtet ist.

Vorteilhaft kann vorgesehen sein, dass das Verschlusselement einen Ventilteller aufweist, der in der Schließstellung mit dem Ventilsitz in Kontakt ist und den Durchgangskanal verschließt. Der Ventilteller und das Verschlusselement können so aus unterschiedlichen Materialien bestehen und einfach ausgetauscht werden.

Zum einfachen Austauschen und Montieren kann vorgesehen sein, dass der Ventilteller eine Ausnehmung aufweist, mit der der Ventilteller auf das Verschlusselement aufgesteckt ist, wobei der Ventilteller eine in der Ausnehmung ausgebildete Sicherungsnut aufweist, wobei in der Sicherungsnut ein Ventilteller-Sicherungsring angeordnet ist, mit dem der Ventilteller an dem Verschlusselement fixiert ist.

Bevorzugt kann vorgesehen sein, dass das Ventil als Handventil ausgebildet ist, wobei das Verschlusselement, insbesondere an dem, dem Ventilteller gegenüberliegenden, Ende des Verschlusselements, ein Handrad zur manuellen Betätigung des Ventils aufweist.

Besonders bevorzugt ist das Ventil als Absperrventil ausgebildet, das den Durchgang für ein Medium durch das Ventil absperrt oder freigibt.

Zur Verstellung des Verschlusselements kann alternativ vorgesehen sein, dass das Verschlusselement, insbesondere an dem dem Ventilteller gegenüberliegenden Ende des Verschlusselements, einen Aktuator, insbesondere einen Elektromotor oder einen elektrischen oder pneumatischen Linearantrieb, zur Verstellung des Verschlusselements aufweist.

Um den Zugang ins Innere des Gehäuses einfacher herzustellen, kann vorgesehen sein, dass das Ventilgehäuse eine Öffnung aufweist, durch die das Verschlusselement in das Innere des Ventils reicht, wobei das Verschlusselement ein Gewinde aufweist, das in ein Gewinde eines zwischen dem Ventilgehäuse und dem Verschlusselement angeordneten Gewindeeinsatzes eingreift, wobei der Gewindeeinsatz über eine Passung in dem Ventilgehäuse herausziehbar eingebracht angeordnet ist und mit einem Sicherungsring lösbar in dem Ventilgehäuse gesichert und fixiert ist. Durch den Gewindeeinsatz, der einfach in das Gehäuse eingebracht und mit dem Sicherungsring gesichert werden kann, ist die Montage und Wartung des Ventils besonderes einfach. Die Entfernung des Sicherungsrings und damit des Gewindeeinsatzes bedarf nur weniger Handgriffe mit einer speziellen Zange für Sicherungsringe. Weiters wird der Zugang aus zwei unterschiedlichen Seiten in das Ventilgehäuse ermöglicht, was eine Wartung vereinfacht.

Vorteilhaft kann zur einfachen Abdichtung vorgesehen sein, dass an dem Gewindeeinsatz umfangseitig eine Ausnehmung für einen Dichtring ausgebildet ist, mit dem der Gewindeeinsatz gegen das Ventilgehäuse des Ventils abgedichtet ist.

Ein weiterer Aspekt der Erfindung sieht vor, dass das Ventil als Vakuumventil ausgebildet ist und in einem Vakuumsystem eingebaut wird. Das Vakuumsystem umfasst dabei eine Vakuumkammer und ein erfindungsgemäßes Vakuumventil, wobei das Rohrstück des Vakuumventils an der Vakuumkammer, insbesondere unlösbar, angeordnet und/oder befestigt ist. Dies erlaubt eine besonders einfache Montage des Vakuumventils an anderen Bauteilen und reduziert die Anzahl der benötigten Verbindungselemente und Verschraubungen und dadurch mögliche Leckagestellen.

Weitere Vorteile und Ausgestaltungen der Erfindung ergeben sich aus der Beschreibung und der beiliegenden Zeichnung.

Die Erfindung ist im Folgenden anhand von besonders vorteilhaften, aber nicht einschränkend zu verstehenden Ausführungsbeispielen in der Zeichnung schematisch dargestellt und wird unter Bezugnahme auf die Zeichnungen beispielhaft beschrieben:

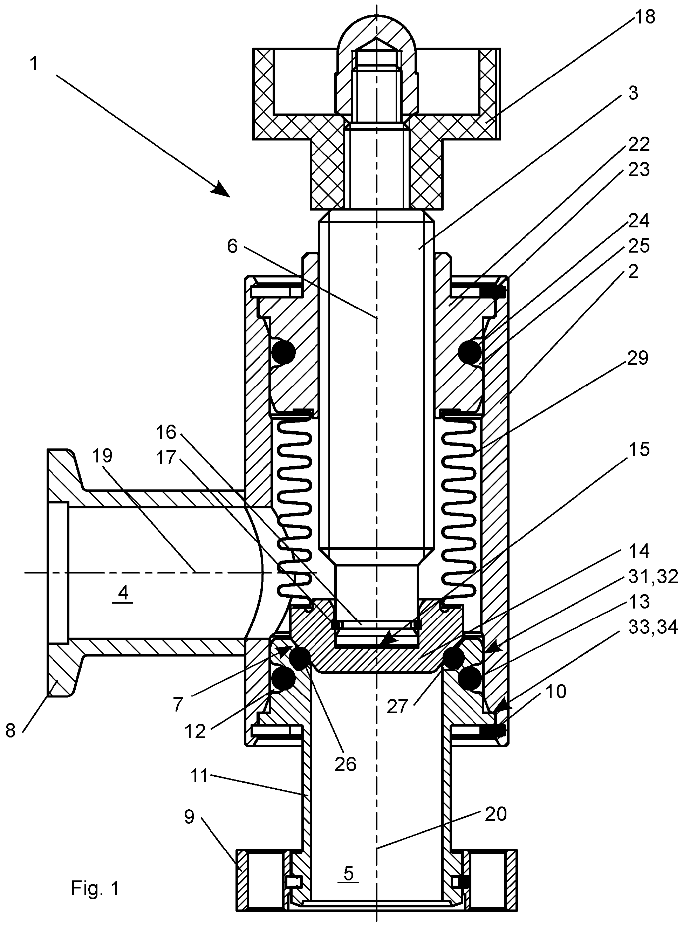

Figur 1 zeigt ein Ventil, das als Vakuumventil 1 ausgebildet ist, gemäß der Erfindung.

In Figur 1 ist eine bevorzugte Ausführungsform des erfindungsgemäßen Ventils in einem Vollschnitt dargestellt. Das Ventil ist dabei als Vakuumventil 1 ausgebildet und umfasst ein Ventilgehäuse 2. Das Ventilgehäuse 2 weist eine erste Ventilöffnung 4 und eine zweite Ventilöffnung 5 auf, die über einen Durchgangskanal verbunden sind, der im Inneren des Ventilgehäuses 2 ausgebildet ist. Die erste Achse 19 der ersten Ventilöffnung 4 und die zweite Achse 20 der zweiten Ventilöffnung 5 sind in einem rechten Winkel bzw. orthogonal zueinander angeordnet. Der Schnittpunkt der beiden Achsen 19, 20 liegt im Inneren des Ventilgehäuses 2. Das Vakuumventil 1 ist bei der in Figur 1 dargestellten Ausführungsform als ein sogenanntes Eckventil ausgebildet.

Das Vakuumventil 1 umfasst ein Verschlusselement 3, das in den Innerraum des Ventilgehäuses 2 in den Durchgangskanal hineinragt und entlang seiner Achse 6 verstellbar ist. Die Achse 6 ist dabei koaxial mit der Achse 20 der zweiten Ventilöffnung 5 angeordnet. Zwischen den beiden Ventilöffnungen 4, 5 ist im Durchgangskanal ein Fließweg für ein Medium oder Fluid (z. B. Prozessgas, oder Prozessfluid) definiert. Der Fließweg erstreckt sich durch den Durchgangskanal und verbindet die erste Ventilöffnung 4 mit der zweiten Ventilöffnung 5. Der Fließweg bzw. der Durchgangskanal kann mittels des Vakuumventils 1 unterbrochen bzw. freigegeben werden. Hierzu wird das Verschlusselement 3 zwischen einer Offenstellung und einer Schließstellung verstellt. In der Schließstellung liegt das Verschlusselement 3 an einem Ventilsitz 7 an und versperrt den von der ersten Ventilöffnung 4 zur zweiten Ventilöffnung 5 verlaufenden Durchgangskanal bzw. den Fließweg des Mediums. In der Offenstellung des Verschlusselements 3 ist dieses vom Ventilsitz 7 abgehoben. In der Offenstellung des Verschlusselements 3 ist der Durchgangskanal von der ersten Ventilöffnung 4 zur zweiten Ventilöffnung 5 und damit der Fließweg des Mediums durch das Vakuumventil 1 freigegeben.

Das Verschlusselement 3 weist in der bevorzugten Ausführungsform der Figur 1, an seinem in den Innenraum des Ventilgehäuses 2 ragenden Ende, einen Ventilteller 14 auf, der in der Schließstellung des Verschlusselements 3 an dem Ventilsitz 7 des Vakuumventils 1 anliegt. Das Vakuumventil 1 umfasst weiters ein Rohrstück 11. Der Ventilsitz 7 des Vakuumventils 1 ist in dem Rohrstück 11 angeordnet bzw. ausgebildet. Das Rohrstück 11 ist mit einem Ende in das Gehäuse 2 des Vakuumventils 1 bzw. des Ventils eigesteckt und weist an dessen anderem Ende die zweite Ventilöffnung 5 auf. Das Rohrstück 11 bildet somit einen Teil des Durchgangskanals bzw. der Verbindung der beiden Ventilöffnungen 4, 5. Das Rohrstück 11 weist ein länglich ausgebildetes Passstück 31 auf, mit dem es in eine gegengleich zum Passstück 31 ausgebildete Rohrstückaufnahme 32 in das Ventilgehäuse 2 in einer Passung eingebracht bzw. angeordnet ist. Das Rohrstück 11 ist dabei so weit in das Ventilgehäuse 2 eingebracht, dass dieses mit einer umlaufenden Schulter 33 an einem gegengleich ausgebildeten, im Ventilgehäuse 2 angeordneten Absatz 34 ansteht. Das Rohrstück 11 ist mittels eines Sicherungsrings 10 in dem Ventilgehäuse 2 fixiert, sodass dieses nicht aus dem Ventilgehäuse 2 austreten oder in diesem verrutschen kann. Der Sicherungsring 10 ist dabei in einem Freistich, der in dem Ventilgehäuse 2 ausgebildet ist, eingebracht. Durch Entfernung des Sicherungsrings 10 kann das Rohrstück 11 wieder aus dem Ventilgehäuse 2 ausgebracht und jederzeit danach wieder zerstörungsfrei eingesetzt werden. Dies erlaubt es, insbesondere bei Verschleiß einzelner Teile des Vakuumventils 1, diese einfach und schnell zu ersetzen.

Wird das Vakuumventil 1 in einem Vakuumsystem eingesetzt, so kann dieses beispielsweise zwischen einer Vakuumpumpe und einer Vakuumkammer angeordnet sein. Wird beispielsweise die erste Ventilöffnung 4 mit einer Vakuumpumpe verbunden und die zweite Ventilöffnung 5 mit der Vakuumkammer, kann über den Durchgangskanal das in der Vakuumkammer befindliche Medium über das Vakuumventil 1 in der Offenstellung des Verschlusselements 3 ausgeleitet werden. Das in der Vakuumkammer befindliche Medium strömt also bei der zweiten Ventilöffnung 5 in das Vakuumventil 1 entlang des Rohrstückes 11 ein, über den Ventilsitz 7 weiter und dann zur ersten Ventilöffnung 4 und über diese dann wieder aus dem Vakuumventil 1 beispielsweise der Vakuumpumpe zu.

An dem Rohrstück 11 ist umfangseitig im Bereich des Passstücks 31 eine Ausnehmung 12 angeordnet. Die Ausnehmung 12 ist in Form einer umlaufenden Vertiefung ausgebildet, in der ein Dichtring 13 angeordnet ist. Der Dichtring 13 dichtet das Rohrstück 11 gegen das Ventilgehäuse 2 des Vakuumventils 1 ab.

Das Verschlusselement 3 ist durch eine Öffnung des Ventilgehäuses 2 geführt. Die Öffnung ist mit einem Gewindeeinsatz 22 abgedeckt. Das Verschlusselement 3 weist ein Gewinde auf und ist mit einem im Gewindeeinsatz 22 gegengleich ausgebildeten Gewinde im Eingriff. Zur Verstellung des Verschlusselements 3 weist das Vakuumventil 1 ein Handrad 18 auf, das an dem aus dem Ventilgehäuse 2 ragenden Ende des Verschlusselements 3 angeordnet ist. Wird das Handrad 18 manuell verdreht, wird das Verschlusselement 3 über das Gewinde in das Ventilgehäuse 2 weiter ein- oder ausgefahren und so der Ventilteller 14 bzw. das Verschlusselement 3 auf den Ventilsitz 7 aufgebracht oder von diesem abgehoben.

Alternativ kann anstelle des Handrades 18 auch ein Aktuator, wie zB. ein elektrischer oder pneumatischer Antrieb, vorgesehen sein, mit dem das Verschlusselement 3 verstellt wird. Dies kann entweder direkt über eine rotatorische oder lineare Verstellung des Verschlusselements 3 oder über ein Getriebe erfolgen.

Der Gewindeeinsatz 22 ist über eine Passung in dem Ventilgehäuse 2 eingesetzt und bis zum Anschlag mit einer Schulter des Ventilgehäuses 2, an der ein Absatz des Gewindeeinsatzes 22 anliegt, eingebracht. Der Gewindeeinsatz 22 ist über einen Sicherungsring 23 in dem Ventilgehäuse 2 gesichert. Mit dem Gewindeeinsatz 22 und dem Rohrstück 11, die jeweils über Passungen in das Ventilgehäuse 2 eingesteckt und mit den Sicherungsringen 10, 23 gesichert sind, ist das Vakuumventil 1 besonders einfach und wartungsfreundlich montierbar und auch sehr platzsparend ausgebildet.

Im Bereich der Passung des Gewindeeinsatzes 22 mit dem Ventilgehäuse 2 ist eine Ausnehmung 25 angeordnet, in die ein Dichtring 24 eingebracht ist. Der Dichtring 24 dichtet das Innere des Ventilgehäuses 2 gegen die Umgebung ab und verhindert ein Austreten des Mediums aus dem Inneren den Ventilgehäuses 2 bzw. ein Eintreten der Umgebungsluft des Vakuumventils 1 bzw. des das Vakuumventil 1 umgebende Mediums in das Innere des Ventilgehäuses 2 bei Anliegen eines Vakuums oder Unterdrucks.

Wie in der Figur 1 dargestellt, kann der Ventilteller 14 eine Ausnehmung 15 aufweisen, mit der der Ventilteller 14 auf das Verschlusselement 3 auf einen, gegengleich zur Ausnehmung 15 ausgebildeten, Absatz aufgesteckt ist. Der Ventilteller 14 weist eine in der Ausnehmung 15 ausgebildete Sicherungsnut 16 auf, in der ein Ventilteller-Sicherungsring 17 angeordnet ist. Der Ventilteller-Sicherungsring 17 sichert den Ventilteller 14 auf dem Verschlusselement 3 und verhindert, dass der Ventilteller 14 von dem Verschlusselement 3 abhebt.

In einer optionalen Ausführungsform des Vakuumventils 1, kann das Vakuumventil 1 einen ersten Flansch 8, im Bereich der ersten Ventilöffnung 4 aufweisen, über den das Vakuumventil 1 mit anderen Teilen eines Vakuumsystems verbindbar ist.

Optional kann das Vakuumventil 1 auch einen zweiten Flansch 9 aufweisen, der im Bereich der zweiten Ventilöffnung 5 angeordnet ist über den das Vakuumventil 1 ebenfalls mit weiteren Teilen eines Vakuumsystems verbunden werden kann. Der zweite Flansch 9 kann dabei wie in Figur 1 beispielhaft dargestellt an dem Rohrstück 11 angeordnet sein.

Alternativ kann das Rohrstück 11 auch direkt auf weiteren Bauelementen eines Vakuumsystems angeordnet sein, beispielsweise angeschweißt, und bei der Montage des Vakuumventils 1 das Ventilgehäuse 2 auf das Rohrstück 11 aufgesteckt werden. So kann das Ventilgehäuse 2 mit der Rohrstückaufnahme 32 auf dem Passstück 31 des Rohrstücks 11 mittels der Passung eingeführt und dann mit dem Sicherungsring10 fixiert bzw. gesichert werden. An dem ersten Flansch 8 kann dann ein Rohr oder Schlauch befestigt werden, mit dem die Verbindung zu einer Vakuumpumpe oder anderen Bauteilen des Vakuumsystems hergestellt wird.

In der bevorzugten in Figur 1 dargestellten Ausführungsform ist in dem Ventilsitz 7 ein Ventilsitz-Dichtungsring 26 integriert, der in der geschlossenen Stellung des Vakuumventils 1 bzw. des Verschlusselements 3 an dem Ventilteller 14 anliegt und den Durchgangskanal abdichtet. In einer nicht dargestellten alternativen Ausführungsform ist kein Ventilsitz-Dichtungsring 26 vorgesehen, sondern kann der Ventilteller 14 oder das Verschlusselement 3 in der geschlossenen Stellung direkt in Kontakt mit dem Ventilsitz 7 stehen.

In optionalen, alternativen, in den Figuren nicht dargestellten Ausführungsformen, kann das Ventil auch als beliebiges anderes Ventil und nicht nur als Vakuumventil ausgebildet sein. So kann die Verstellung des Verschlusselements 3 auch den Durchgangsweg für andere Medien, wie Prozessgase, Prozessfluide andere Gase oder Fluide dienen. Der Wesentliche Aspekt eines erfindungsgemäßen Ventils ist, dass das Ventil ein Rohrstück 11 aufweist, das in dem Ventilgehäuse 2 mittels eines Sicherungsrings 10 gesichert ist.

Diese Ausbildung erlaubt eine breite Anwendung des Ventils über die Vakuumtechnik hinaus, wobei insbesondere Anwendungen vom Hochvakuumbereich bis hin zu einem Überdruck von ca. 10 bar und darüber hinaus vorgesehen sind. Auch die weiteren optionalen Merkmale können bei den erfindungsgemäßen Ventilen, wie für das Vakuumventil 1 der Figur 1 beschreiben, optional oder alternativ vorgesehen sein.

Analog zur Ausbildung als Vakuumventil strömt, bei der Verwendung des Ventils mit Prozessgasen, das jeweilige Gas an der zweiten Ventilöffnung 5 in das Ventil ein, strömt bei geöffnetem Verschlusselement 3 über den Ventilsitz 7 dem Durchgangskanal entlang der ersten Ventilöffnung 4 zu und dann über diese aus dem Ventil aus. Das Ventil kann beispielsweise zwischen unterschiedlichen Komponenten eines Prozess-Systems angeordnet sein und so den Durchgangsweg für unterschiedliche Gase, und Flüssigkeiten regeln bzw. freigeben.

In der bevorzugten Ausbildung des Ventils als Vakuumventil 1 sind der Großteil der Bauteile, mit Ausnahme der Dichtungsringe 13, 24, 26 des Ventils aus Metall. So wird ein Ausgasen, das bei Kunststoffen oft auftritt, vermieden, was insbesondere bei der Vakuumanwendung besonders negative Auswirkungen hat.

Weiters sind auch in optionalen Ausführungsformen des Ventils, insbesondere bei der Ausbildung als Vakuumventil, die Ausnehmungen oder Freistiche, in denen die Dichtungsringe 13, 24, 26 angeordnet sind, entlüftet. So können diese wie in Figur 1 beispielhaft für den Ventilsitz-Dichtungsring 26 gezeigt, jeweils eine Entlüftungsöffnung 27 aufweise, die eine Verbindung zwischen der Ausnehmung bzw. dem Freistich und dem Inneren des Ventilgehäuses 2 bzw. dem Durchgangskanal oder der Umgebung herstellt. So kann etwaige während der Montage "gefangene" Luft oder Gas ausgeleitet werden und verhindert dadurch, dass diese während der Verwendung des Ventils langsam austritt und dann die Prozessgase oder das erzeuge Vakuum verunreinigt.

Das als Vakuumventil 1 ausgebildete Ventil der Figur 1weist optional einen Balg 29 auf. Der Balg 29 ist einerseits mit dem Ventilteller 14 verbunden und andererseits mit dem Inneren des Gewindeeinsatzes 22. Der Balg 29 ist bevorzugt als metallischer Wellen-, oder Faltenbalg oder als eine Memrbran ausgebildet, kann aber in anderen Anwendungen und Ausbildungen des Ventils auch aus Kunststoffen bestehen. Der Balg 29 stellt eine atmosphärische Abtrennung von zumindest Teilen der Antriebseinheit z.B. dem Verschlusselement 3 und dem Durchgangskanal bereit. Damit kann ein Eintrag von antriebsseitig generierten Partikeln in den Durchgangskanal zwischen der ersten Ventilöffnung 4 und der zweiten Ventilöffnung 5 verhindert werden.

Eine bevorzugte Ausbildung des Ventils bzw. des Vakuumventils 1 sieht vor, dass dieses als Absperrventil ausgebildet ist und den Durchgangskanal in der Schließstellung absperrt bzw. den Weg für das Medium durch das Ventil bzw. Vakuumventil im geöffneten Zustand freigibt.

## Patentansprüche

1. Ventil, insbesondere Vakuumventil (1), zum gasdichten Unterbrechen und Steuern eines Fließweges, umfassend:
- ein Ventilgehäuse (2) mit einer ersten Ventilöffnung (4) und einer zweiten Ventilöffnung (5),
- ein Verschlusselement (3), welches in einem Innenraum des Ventilgehäuses (2) angeordnet ist und in einer Achse (6) zwischen einer Offenstellung und einer Schließstellung verfahrbar ist und in der Schließstellung an einem Ventilsitz (7) des Ventils anliegt und den von der ersten Ventilöffnung (4) zur zweiten Ventilöffnung (5) verlaufenden Durchgangskanal verschließt und das Verschlusselement (3) in der Offenstellung vom Ventilsitz (7) abgehoben ist, wobei in der Offenstellung des Verschlusselements (3) ein von der ersten Ventilöffnung (4) zur zweiten Ventilöffnung (5) verlaufender Durchgangskanal durch das Ventil freigegeben ist,
- einen ersten Flansch (8), im Bereich der ersten Ventilöffnung (4) und einen zweiten Flansch (9) im Bereich der zweiten Ventilöffnung (5) mit denen das Ventil mit anderen Bauteilen eines Vakuumsystems verbindbar ist,
**dadurch gekennzeichnet, dass** das Ventil ein Rohrstück (11) aufweist, an dem der zweite Flansch (9) angeordnet ist, wobei in dem Rohrstück (11) der Ventilsitz (7) ausgebildet ist, wobei das Rohrstück (11) über eine Passung in dem Ventilgehäuse (2) herausziehbar eingebracht angeordnet ist und mit einem Sicherungsring (10) lösbar in dem Ventilgehäuse (2) gesichert und fixiert ist.

2. Ventil nach Anspruch 1, **dadurch gekennzeichnet, dass** die erste Ventilöffnung (4) eine erste Achse (19) aufweist und die zweite Ventilöffnung (5) eine, winkelig zur ersten Achse (19) stehende, zweite Achse (20) aufweist, wobei die erste Achse (19) und die zweite Achse (20) sich in einem Schnittpunkt schneiden, wobei insbesondere die erste Achse (19) und die zweite Achse (20) senkrecht in einem Winkel von 90° zueinander angeordnet sind und das Ventil als Eckventil ausgebildet ist und die Achse (6) des Verschlusselements (3) mit der zweiten Achse (20) koaxial angeordnet ist.

3. Ventil nach einem der vorangehenden Ansprüche, **dadurch gekennzeichnet, dass** an dem Rohrstück (11) umfangseitig eine Ausnehmung (12) für einen Dichtring (13) ausgebildet ist mit dem das Rohrstück (11) gegen das Ventilgehäuse (2) des Ventils abgedichtet ist.

4. Ventil nach einem der vorangehenden Ansprüche, **dadurch gekennzeichnet, dass** das Verschlusselement (3) einen Ventilteller (14) aufweist, der in der Schließstellung mit dem Ventilsitz (7) in Kontakt ist und den Durchgangskanal verschließt.

5. Ventil nach einem Anspruch 4, **dadurch gekennzeichnet, dass** der Ventilteller (14) eine Ausnehmung (15) aufweist, mit der der Ventilteller (14) auf das Verschlusselement (3) aufgesteckt ist, wobei der Ventilteller (14) eine in der Ausnehmung (15) ausgebildete Sicherungsnut (16) aufweist, wobei in der Sicherungsnut (16) ein Ventilteller-Sicherungsring (17) angeordnet ist, mit dem der Ventilteller (14) an dem Verschlusselement (3) fixiert ist.

6. Ventil nach einem der vorangehenden Ansprüche, **dadurch gekennzeichnet, dass** das Vakuumventil (1) als Handventil ausgebildet ist, wobei das Verschlusselement (3), insbesondere an dem, dem Ventilteller (14) gegenüberliegenden, Ende des Verschlusselements (3), ein Handrad (18) zur manuellen Betätigung des Ventils aufweist.

7. Ventil nach einem der vorangehenden Ansprüche, **dadurch gekennzeichnet, dass** das Verschlusselement (3), insbesondere an dem, dem Ventilteller (14) gegenüberliegenden, Ende des Verschlusselements (3), einen Aktuator, insbesondere einen Elektromotor oder einen elektrischen oder pneumatischen Linearantrieb, zur Verstellung des Verschlusselements (3) aufweist.

8. Ventil nach einem der vorangehenden Ansprüche, **dadurch gekennzeichnet, dass** das Ventilgehäuse (2) eine Öffnung aufweist, durch die das Verschlusselement (3) in das Innere des Ventils reicht, wobei das Verschlusselement (3) ein Gewinde aufweist, das in einGewinde eines zwischen dem Ventilgehäuse (2) und dem Verschlusselement (3) angeordneten Gewindeeinsatzes (22) eingreift, wobei der Gewindeeinsatz (22) über eine Passung in dem Ventilgehäuse (2) herausziehbar eingebracht angeordnet ist und mit einem Sicherungsring (23) lösbar in dem Ventilgehäuse (2) gesichert und fixiert ist.

9. Ventil nach Anspruch 8, **dadurch gekennzeichnet, dass** an dem Gewindeeinsatz (22) umfangseitig eine Ausnehmung (25) für einen Dichtring (24) ausgebildet ist, mit dem der Gewindeeinsatz (22) gegen das Ventilgehäuse (2) des Ventils abgedichtet ist.

10. Ventil, insbesondere Vakuumventil (1), nach einem der vorangehenden Ansprüche, **dadurch gekennzeichnet, dass** das Ventil, insbesondere Vakuumventil (1), als Absperrventil ausgebildet ist.

11. Vakuumsystem umfassend eine Vakuumkammer und ein als Vakuumventil (1) ausgebildetes Ventil nach einem der Ansprüche 1 bis 10, **dadurch gekennzeichnet, dass** das Rohrstück (11) an der Vakuumkammer, insbesondere unlösbar, angeordnet und/oder befestigt ist.
